# EUROPÄISCHE PATENTSCHRIFT

(11) **EP 3 371 479 B1**
(45) Veröffentlichungstag und Bekanntmachung des Hinweises auf die Patenterteilung: **21.08.2019**
(21) Anmeldenummer: 16788531.8
(22) Anmeldetag: 31.10.2016
(51) Int. Cl.: F16D 69/04, F16D 65/08

(54) **BREMSBACKE**
BRAKE SHOE
MÂCHOIRE DE FREIN

(30) Priorität: 03.11.2015 DE 102015118783
(43) Veröffentlichungstag der Anmeldung: 12.09.2018
(73) Patentinhaber: SAF-HOLLAND GmbH, 63856 Bessenbach (DE)
(72) Erfinder: BRUNSCH, Bernd, 63303 Dreieich (DE)
(74) Vertreter: Müller Schupfner & Partner Patent- und Rechtsanwaltspartnerschaft mbB
(86) Internationale Anmeldenummer: PCT/EP2016/076194
(87) Internationale Veröffentlichungsnummer: WO 2017/076790

(56) Entgegenhaltungen:
- EP-A1- 1 318 321
- WO-A1-03/098068
- WO-A2-2015/019380
- DE-U1-202013 101 402
- FR-A1- 2 666 632

## Beschreibung

Die vorliegende Erfindung betrifft eine Bremsbacke, insbesondere einer Trommelbremse für Nutzfahrzeuge, sowie ein Verfahren zum Herstellen einer Nietverbindung.

Bremsbeläge werden oft vernietet. Zum Einsatz kommen z. B. hubgesteuerte Nietmaschinen. Bekannt ist auch die Verwendung von kraftgesteuerten Nietmaschinen, welche eine Verbesserung in der Hinsicht darstellen, als Dickenunterschiede der beteiligten Bauteile ausgeglichen werden können, wodurch immer eine gleichmäßige Vorlast des Niets, beispielsweise auf dem Bremsbelag, garantiert wird. Bei der Befestigung von Bauteilen zueinander oder aneinander im Allgemeinen bzw. bei den bekannten Nietverfahren besteht grundsätzlich der Nachteil, dass ein Verändern der Dicke der Bauteile im Betrieb, z. B. durch Setzen in Folge thermischer Beaufschlagung, nicht ausgeglichen werden kann, sodass eine anfangs eingestellte Vorlast gegebenenfalls verlorengeht und somit keine dauerhafte Verbindung mehr gewährleistet ist. Problematisch ist dies insbesondere bei der Befestigung von Bremsbelägen, als diese besonders hohen thermischen Lasten ausgesetzt sind.

Das Dokument WO 2015/ 019380 A2 offenbart eine Platte zur Unterstützung von Reibmaterialknöpfen für Scheibenbremsen von Schienenfahrzeugen.

Das Dokument EP 1 318 321 A1 zeigt eine Bremsbacke, insbesondere für ein Schienenfahrzeug, mit einer Unterstützungsplatte und einer Anzahl von Reibmaterialblöcken.

Die DE 20 2013 101 402 U1 befasst sich mit einem Bremsbelag für Teilbelag-Scheibenbremsen, insbesondere für Schienenfahrzeuge, mit mehreren Reibelementen, die über je ein Verbindungsmittel auf einer Trägerplatte aufgenommen sind, dadurch gekennzeichnet dass das Verbindungsmittel eine Membran ist.

Die WO 03/ 098068 A1 offenbart einen Bremsbelag für Scheibenbremsen eines Fahrzeugs, insbesondere eines Schienenfahrzeugs, mit einer Trägerplatte an der mehrere Reibelemente befestigt sind.

Die FR 2666632 A1 befasst sich mit einer Bremsbacke mit mehreren Reibelementen.

Es ist daher Aufgabe der vorliegenden Erfindung, eine Bremsbacke sowie ein Verfahren zum Herstellen einer Nietverbindung, anzugeben, wodurch ermöglicht wird, dass auch im Betrieb eine gleichmäßige Vorlast aufrechterhalten wird.
Diese Aufgabe wird durch eine Bremsbacke gemäß Anspruch 1 sowie durch ein Verfahren zum Herstellen einer Nietverbindung gemäß Anspruch 12 gelöst. Weitere Vorteile und Merkmale ergeben sich aus den Unteransprüchen sowie der Beschreibung und den beigefügten Figuren.

Erfindungsgemäß umfasst eine Bremsbacke, insbesondere einer Trommelbremse für Nutzfahrzeuge, einen Belagträger mit einer Anordnungsfläche zur Anordnung eines Bremsbelags, sowie einen Befestigungsbereich, der ausgelegt ist, mit einem Befestigungsmittel zur Befestigung des Bremsbelags in Eingriff gebracht zu werden, wobei der Befestigungsbereich zu Anordnungsfläche rückstellfähig verlagerbar ausgebildet ist. Bevorzugt handelt es sich bei der Bremsbacke um eine Bremsbacke einer Trommelbremse, insbesondere für Nutzfahrzeuge. Es kann sich aber auch um eine Bremsbacke für Scheibenbremsen handeln. Beide weisen entsprechende Belagträger oder Belagträgerbereiche mit entsprechenden Anordnungsflächen zur Anordnung und Befestigung des Bremsbelags auf, wobei der wesentliche Unterschied darin besteht, dass der Belagträger bei Scheibenbremsen flach bzw. eben ausgebildet ist, während der Belagträger bei Trommelbremsen gekrümmt bzw. zylindermantelflächig ausgebildet ist. Bevorzugt handelt es sich bei dem Befestigungsmittel bzw. -element, welches an seinen Enden entsprechende Endabschnitte aufweist, um ein Nietelement bzw. um eine Niete, wobei die Art des verwendeten Niets nicht entscheidend ist. Die Endabschnitte des Nietelements werden als Schließkopf und Setzkopf bezeichnet. Ist das Befestigungselement z. B. eine Schraube mit zugehöriger Mutter, sind die Endabschnitte durch den Schraubenkopf und die entsprechende Mutter gebildet etc. Über die Endabschnitte erfolgt die Krafteinleitung des Befestigungsmittels in den Belagträger und den Bremsbelag zu deren Verbindung/Befestigung aneinander. Es erfolgt also das Aufbringen einer Vorspannkraft bzw. Vorlast zur Befestigung des Bremsbelags am Belagträger. Der Befestigungsbereich weist dementsprechend ein Öffnung oder Bohrung zur Anordnung des Befestigungsmittels auf, wobei ein Durchmesser z. B. in einem Bereich von etwa 3-10 mm, bevorzugt von etwa 5-8 mm, liegt. Kongruent dazu sind im Bremsbelag Öffnungen/Bohrungen vorhanden. Nachfolgend wird, ohne eine Beschränkung der Allgemeinheit, vorwiegend auf die Nietverbindung bzw. die Verwendung eines Nietelements, Bezug genommen. Der Bremsbelag, welcher beispielsweise ein organischer Bremsbelag sein kann, kann sich, insbesondere durch die thermische Belastung beim Bremsen, setzen, was bedeutet, dass es zu einer Dickenreduzierung (des Bremsbelags) kommen kann, welche dazu führt, dass eine Vorlast der Nietverbindung, welche beispielsweise in einem Bereich von 300 daN liegt, verringert wird. Mit Vorteil ist daher der Befestigungsbereich zur Anordnungsfläche rückstellfähig verlagerbar ausgebildet. Dadurch ist es möglich, dass ein verringerte Gesamtdicke, welche sich quasi zwischen den beiden Endabschnitten des Befestigungsmittels bemisst, kompensiert wird, insbesondere als durch die Verlagerung eine Rückstellkraft vorhanden ist, welche ausgelegt ist, den Befestigungsbereich zurückzustellen, wobei diese Rückstellung weg vom Bremsbelag gerichtet ist. Bei jeder (Niet-)verbindung kann oder wird es der Fall sein, dass sich zumindest einer der zu verbindenden Körper/Elemente im Bereich der Krafteinleitung durch ein Befestigungsmittel, wie eine Niete, elastisch bzw. auch plastisch verformt, zumindest im mikroskopischen Bereich. Eine derartige Verformung oder auch Verlagerung ist aber nicht geeignet, die vorbeschriebene Wirkung, nämlich die Aufrechterhaltung einer gleichmäßigen Vorlast der Nietverbindung im Betrieb aufrechtzuerhalten. Entscheidend ist, dass der Befestigungsbereich als solches bzw. in seiner Gesamtheit zur Anordnungsfläche rückstellfähig verlagerbar ausgebildet ist, nicht nur ein infinitesimal kleiner Oberflächenbereich. Die Verbindung ist nicht darauf beschränkt, dass der Bremsbelag unmittelbar auf dem Belagträger bzw. dessen Anordnungsfläche angeordnet wird. Ist beispielsweise zwischen dem Bremsbelag und dem Belagträger ein weiteres Element, beispielsweise eine Zwischenschicht, angeordnet, welche sich ebenfalls setzen kann, erfüllt der Befestigungsbereich ebenfalls seine Funktion.

Erfindungsgemäß weist der Befestigungsbereich einen Versatz gegenüber dem Belagträger, insbesondere dessen Anordnungsfläche, auf. Hierzu ist der Befestigungsbereich zweckmäßigerweise von der Anordnungsfläche weg orientiert bzw. beabstandet angeordnet, bei einer Bremsbacke für eine Trommelbremse also zu dessen Innenseite hin orientiert. Der Versatz wird durch eine Umformung des Belagträgers erreicht, beispielsweise durch ein Durchstellen, wodurch der Befestigungsbereich formbar ist. Durch das Umformen wird auch die Verlagerbarkeit des Befestigungsbereichs ermöglicht, da der Versatz bzw. die Durchstellung beim Befestigen des Bremsbelags zumindest teilweise wieder zurückverformt wird, der elastische Anteil jedoch eine bleibende Vorlast erzeugt, welche ein Setzen ausgleichen kann.

Gemäß einer Ausführungsform ist der Befestigungsbereich im Wesentlichen parallel zum Belagträger, insbesondere dessen Anordnungsfläche, orientiert, wobei der Versatz in einem Bereich von bevorzugt etwa 0,1 bis 0,8 mm, besonders bevorzugt etwa 0,3 bis 0,6 mm, liegt. Der Versatz bemisst sich dabei insbesondere zu einer Fläche des Belagträgers, welcher der Anordnungsfläche im Wesentlichen gegenüber liegt, nachfolgend Rückseite genannt. Diese Rückseite ist zweckmäßigerweise im Wesentlichen parallel zur Anordnungsfläche orientiert, sodass der Belagträger im Wesentlichen plattenförmig ausgebildet ist. Im Falle einer Bremsbacke für Trommelbremsen ist die Platte gekrümmt, während sie für Scheibenbremsen eben ausgebildet ist. Als Material kommt in beiden Fällen bevorzugt ein Metallwerkstoff zum Einsatz, insbesondere ein Stahlwerkstoff. Versuche haben ergeben, dass die vorgenannten Dimensionen des Versatzes besonders gute Rückstelleigenschaften aufweisen.

Gemäß einer Ausführungsform umfasst die Bremsbacke zumindest eine Ausnehmung, welche einen Steg formt, der den Belagträger mit dem Befestigungsbereich verbindet. Der Steg bewirkt zum einen eine Positionierung des Befestigungsbereichs und stellt zum anderen die erforderliche Elastizität und Rückstellfähigkeit bereit. Der Befestigungsbereich kann sozusagen über einen entsprechend ausgebildeten Steg "federn". Weiter wird durch den Steg die Festigkeit der Verbindung beeinflusst, da über den Steg der Kraftfluss von dem Befestigungselement/dem Nietelement auf den Befestigungsbereich und zum Belagträger bereitgestellt wird. Gemäß einer Ausführungsform erstreckt sich der Steg, bezogen auf eine Mitte des Befestigungsbereichs, über einen Winkel von etwa 2-30 °, bevorzugt von etwa 5-20 °. Analog dazu ist eine Ausnehmung geformt, die einen Winkel von etwa 330-358 ° formt, bevorzugt von etwa 340-355 °. In einer bevorzugten Ausführungsform sind z. B. zwei gegenüberliegende, kreissegmentförmige Ausnehmungen vorgesehen, welche achsensymmetrisch zueinander angeordnet sind, und welche entsprechend zwei Stege formen. Die Ausnehmungen erstrecken sich dabei bevorzugt über einen Winkel von etwa 150-170 °.

Gemäß einer Ausführungsform ist die zumindest eine Ausnehmung zumindest abschnittsweise im Wesentlichen kreissegmentförmig ausgebildet. Zweckmäßigerweise ist die Ausnehmung um den Befestigungsbereich herum ausgebildet; die Ausnehmung formt sozusagen den Befestigungsbereich und bestimmt damit dessen Geometrie. Zweckmäßigerweise ist daher auch der Befestigungsbereich z. B. im Wesentlichen rund, insbesondere kreisrund, oval oder elliptisch ausgebildet. Die Ausnehmung bzw. der Spalt oder auch Durchbruch kann hineingeschnitten, - gelasert, -gestanzt, -gefräst etc. sein. Zweckmäßigerweise erfolgt zunächst das Einbringen der zumindest einen Ausnehmung oder des Spalts und im Anschluss das Verlagern, insbesondere das Durchstellen auf das gewünschte Maß. Bezogen auf die Bremsbacke bedeutet dies, dass der Befestigungsbereich insbesondere nach innen durchgestellt ist, also weg von der Anordnungsfläche, an welcher der Bremsbelag angeordnet wird. Neben den vorgenannten Formen kann die Ausnehmung auch zumindest bereichsweise quadratisch, rechteckig oder allgemein vieleckig ausgebildet sein, was dann analog auch für den Befestigungsbereich gilt. Da die Ausnehmung den Zweck hat, eine Verlagerbarkeit zwischen dem Befestigungsbereich und dem Belagträger bereitzustellen, würde es ausreichen, wenn die Ausnehmung infinitesimal klein ausgebildet ist. Für die Fertigung hat es sich aber z. B. als vorteilhaft erwiesen, wenn über die Breite der Ausnehmung(en) direkt der Steg (oder ggf. auch mehrere) geformt wird. Bei dieser Ausführungsform entspricht die Stegbreite im Wesentlichen einer Breite der Ausnehmung.

Gemäß einer Ausführungsform verlaufen zumindest Bereiche der zumindest einen Ausnehmung im Wesentlichen parallel zueinander. Damit kann ein Steg geformt werden, dessen Breite (deutlich) größer als die Breite der Ausnehmung ist. Die Bereiche können auch in einem Winkel zueinander verlaufen, also nicht parallel zueinander, ggf. auch gekrümmt. Entscheidend ist lediglich, dass ein Steg (oder auch mehrere) mit der gewünschten Länge geformt wird. Gemäß einer Ausführungsform weist der Befestigungsbereich z. B. eine Schlüsselloch-Kontur auf, welche bevorzugt ausgestanzt und dann durchgestellt ist, sodass der vorgenannte Versatz erzeugt wird. Ein Bereich der Ausnehmung ist hierbei kreissegmentförmig ausgebildet, während die Ausnehmung in einem anderen Bereich im Wesentlichen parallel zueinander verläuft. Über die Länge des Stegs kann sehr gut die Flexibilität sowie die Rückstellkraft des ersten Abschnitts gesteuert werden.

Die Breite oder auch Länge des Stegs ist stark vom Einzelfall und insbesondere von der Anzahl der Stege abhängig sowie von der Materialdicke des Belagträgers. Gemäß einer Ausführungsform ist der Belagträger, bzw. die Bremsbacke im Allgemeinen, aus einem Stahlwerkstoff gebildet, mit einer Dicke von etwa 1 bis 5 mm. Es hat sich gezeigt, dass ein vorteilhaftes Verhältnis einer Dicke des Befestigungsbereichs zu einer Breite des (einzigen) Stegs in einem Bereich von etwa 0,05 bis 1, bevorzugt bei etwa 0,1 bis 0,5, insbesondere bevorzugt bei etwa 0,15 bis 0,35 liegt. Sind mehrere Stege vorgesehen, sind die vorgenannten Werte entsprechend durch die Anzahl der Stege zu teilen. Gleiches konnte in Bezug auf die Länge des Stegs festgestellt werden, sodass ein guter Kompromiss aus Rückstellfähigkeit und Festigkeit möglich ist, wenn ein Verhältnis der Dicke des ersten Abschnitts zu der Länge des Stegs in einem Bereich von 0,05 bis 1, bevorzugt bei etwa 0,1 bis 0,5, insbesondere bevorzugt bei etwa 0,15 bis 0,35 liegt. Die Steglänge bemisst sich bezogen auf die Öffnung im Wesentlichen in Umfangsrichtung, während sich die Stegbreite in etwa radial zur Öffnung bemisst. Wie vorher bereits angedeutet, kann die Länge des Stegs auch über entsprechende Winkelangaben erfolgen.

Gemäß einer Ausführungsform weist der Befestigungsbereich die Öffnung auf, wobei eine Vielzahl von Stegen umfänglich, vorzugsweise gleichverteilt um die Öffnung angeordnet ist. Durch die Verwendung einer Vielzahl von Stegen lässt sich individuell, je nach Anwendungsfall, ein idealer Kompromiss aus Festigkeit und Elastizität schaffen. Bei der Verwendung von zwei Stegen sind diese bevorzugt gegenüberliegend angeordnet sind, da damit die Verlagerbarkeit des ersten Abschnitts gut gesteuert werden kann. Bevorzugt ist also insbesondere eine achsensymmetrische Anordnung der Stege bzw. der Ausnehmungen.

Gemäß einer Ausführungsform formt der zumindest eine Steg einen Winkel mit dem Belagträger, insbesondere dessen Anordnungsfläche, welcher bevorzugt zwischen 10° und 50° liegt. Diese Geometrie ermöglicht die Bereitstellung einer ausreichend hohen Vorlast und stellt sicher, dass der Befestigungsbereich beim Vernieten eine gute Verlagerbarkeit aufweist. Gemäß einer Ausführungsform weist auch der Befestigungsbereich den vorgenannten Winkel relativ zum Belagträger auf, ist also nicht parallel zum Belagträger orientiert sondern führt sozusagen die Form des Stegs weiter. Der Versatz bemisst sich in diesem Fall sozusagen an dem Punkt des Befestigungsbereich, der am weitesten von dem Belagträger weg orientiert ist.

Gemäß einer Ausführungsform weist der Belagträger eine Vielzahl von Befestigungsbereichen auf, welche insbesondere in einer Reihe angeordnet sind. Zweckmäßigerweise sind bei einer Bremsbacke für Trommelbremsen, insbesondere für Nutzfahrzeuge, z. B. zwei Reihen von jeweils 7-9, beispielsweise 8, Befestigungsbereichen vorgesehen, welche entlang der Reihe bevorzugt in gleichem Abstand zueinander angeordnet sind. Die Reihen sind dabei zweckmäßigerweise entlang einer Reib- oder Bremsrichtung orientiert.

Die Erfindung bezieht sich auch auf ein Verfahren zum Herstellen einer Nietverbindung zwischen zumindest zwei Bauteilen,
umfassend die Schritte:
- Bereitstellen eines Nietelements sowie Bereitstellen von zumindest zwei Bauteilen, wobei ein erstes Bauteil eine Anordnungsfläche zur Anordnung eines zweiten Bauteils aufweist;
- Umformen, insbesondere Durchstellen, eines Befestigungsbereichs des ersten Bauteils derart, dass er beim Befestigen des zweiten Bauteils auf der Anordnungsfläche über das Nietelement zumindest teilweise rückverformt wird, wobei der Befestigungsbereich ausgelegt ist, mit dem Nietelement zur Befestigung des zweiten Bauteils in Eingriff gebracht zu werden;
- Befestigen der zwei Bauteile mit dem Nietelement.

Gemäß einer bevorzugten Ausführungsform ist das erste Bauteil eine Bremsbacke, insbesondere einer Trommelbremse für Nutzfahrzeuge, und das zweite Bauteil ein Bremsbelag. Sämtliche Vorteile und Merkmale, welche auch in Bezug auf die erfindungsgemäße Bremsbacke genannt wurden, gelten analog und entsprechend für das Verfahren, wie auch umgekehrt.

Weitere Eigenschaften und Merkmale ergeben sich aus den Unteransprüchen sowie der nachfolgenden Beschreibung von bevorzugten Ausführungsformen und den beigefügten Figuren, wobei einzelne Ausführungsformen zu neuen Ausführungsformen miteinander kombiniert werden können. Es zeigen:
- Figur 1:: eine Prinzipskizze des Wirkprinzips einer Bremsbacke;
- Figuren 2a-2d:: verschiedene Ausführungsformen von Befestigungsbereichen;
- Figuren 3a-3b:: Schnittdarstellungen von Befestigungsbereichen;
- Figur 4:: eine weitere Ausführungsform eines Befestigungsbereichs;
- Figuren 5a-5b:: verschiedene Ansichten einer Bremsbacke.

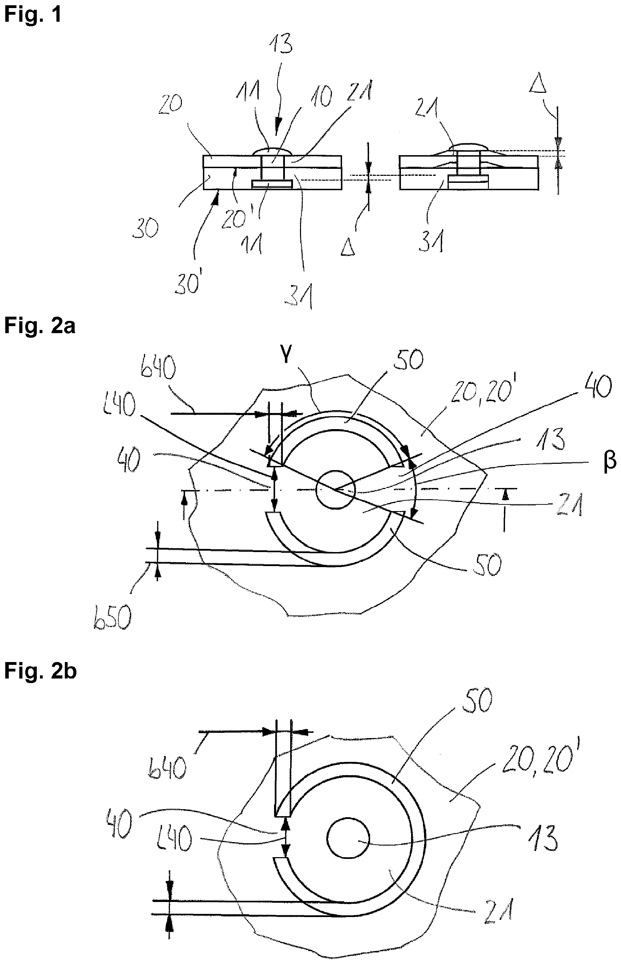

**Fig. 1** erklärt schematisch das Wirkprinzip einer Bremsbacke. Skizzenhaft dargestellt sind eine Bremsbacke 20 und ein Bremsbelag 30, welche Befestigungsbereiche 21 und 31 aufweisen, welche wiederum eine Öffnung 13 formen, in welcher ein Befestigungsmittel 10, wie ein Nietelement, welches entsprechende Endabschnitte 11 umfasst, angeordnet ist. Der Belagträger 20 weist eine Anordnungsfläche 20' auf. Der Bremsbelag 30 weist eine Reibfläche 30' auf. Aus diesem Grund ist hier der Befestigungsabschnitt 31 bzw. der dort gebildete Teil der Öffnung 13 derart ausgebildet, dass ein entsprechender Endabschnitt 11 des Befestigungsmittel 10 hier gegenüber der Reibfläche 30' verlagert ist. In der rechten Bildhälfte ist zu sehen, dass der Befestigungsbereich 21, indem er sich von der Reibfläche 30' weg verlagert, eine Setzung Δ ausgleichen kann. Ermöglicht wird dies dadurch, dass der Befestigungsbereich 21 zur Anordnungsfläche 20' rückstellfähig verlagerbar ausgebildet ist. Gibt nun der Bereich unterhalb des Endabschnitts 11 des Bremsbelags 30 nach, wie es durch die Setzung Δ angedeutet ist (vgl. linke Bildhälfte), kann dies durch die Verlagerung des Befestigungsbereichs 21 bzw. dessen Rückstellfähigkeit, wie in der rechten Bildhälfte schematisch dargestellt, kompensiert werden.

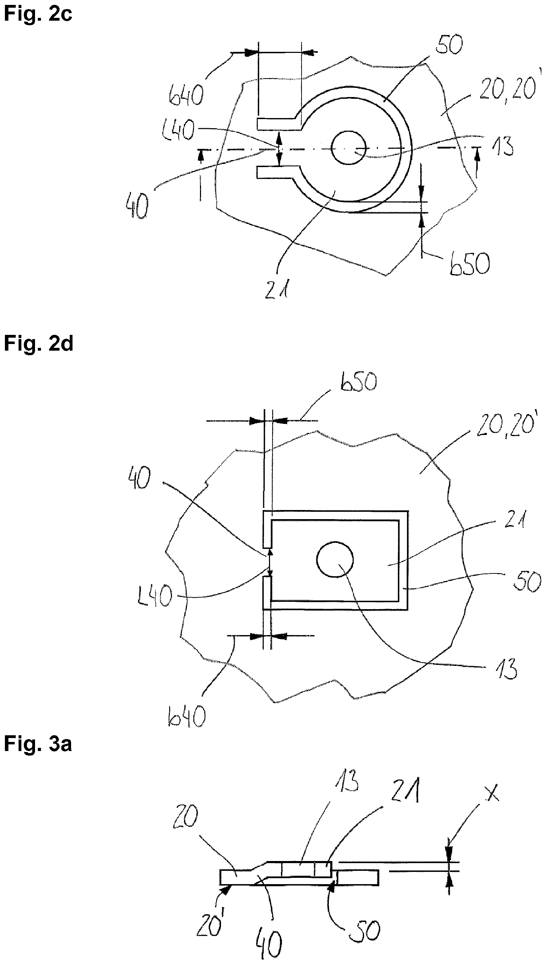

Die **Fig. 2a bis 2d** zeigen verschiedene Ausführungsformen von Befestigungsbereichen 21 eines Belagträgers 20 in der Draufsicht. Zu sehen ist immer eine Öffnung 13, um welche herum ein Befestigungsbereich 21 ausgebildet ist. Ausnehmungen 50 sind in den Figuren 2a bis 2c kreissegmentförmig bzw. ringförmig ausgebildet ist, in der Figur 2d im Wesentlichen rechteckförmig. Figur 2a zeigt insbesondere zwei kreissegmentförmige Ausnehmungen 50, welche gegenüberliegend bzw. achsensymmetrische angeordnet sind. Figur 2c zeigt eine Ausführungsform mit einer Ausnehmung 50, welche in einem Abschnitt kreissegmentförmig ausgebildet ist. In einem anderen Abschnitt ist die Ausnehmung 50 so geformt, dass entsprechende Bereiche der Ausnehmung 50 im Wesentlichen parallel zueinander verlaufen. Hier ist eine Stegbreite b40 deutlich breiter als eine Breite b50 der Ausnehmung bzw. des Spalts 50. Über die Breite b40 lässt sich sehr gut die Elastizität des Befestigungsbereichs 21 einstellen. Das Gleiche gilt in Bezug auf eine Steglänge l40. Die Steglänge l40 bemisst sich, bezogen auf die Öffnung 13, im Wesentlichen im Umfangsrichtung, während sich die Stegbreite b40 in etwa radial zur Öffnung 13 bemisst. Die Bemaßung kann auch über Winkelangaben erfolgen. Mit Bezug auf die Figur 2a sind beispielsweise die Winkel β und γ angegeben, welche ebenfalls zur Bemaßung herangezogen werden können. Der Winkel β liegt in der hier gezeigten Ausführungsform z. B. in einem Bereich von etwa 15-25°, während der Winkel γ in einem Bereich von etwa 140-160° liegt.

**Fig. 3a** zeigt einen Schnitt durch die in der Figur 2c gezeigte Ausführungsform des Belagträgers 20, entlang der dort gekennzeichneten Schnittlinie. Deutlich wird hier ein Versatz x, den der Befestigungsbereich 21 gegenüber dem Belagträger 20 aufweist. Zu sehen ist auch der Verlauf des Stegs 40 sowie die Orientierung der Ausnehmung 50 bzw. des Spalts 50. In der hier gezeigten Ausführungsform ist der Befestigungsbereich 21 im Wesentlichen parallel zum Belagträger 20 orientiert. Gemäß einer anderen, hier nicht gezeigten Ausführungsform, wäre es aber auch denkbar, dass sich der Befestigungsbereich 21 nicht parallel zum Belagträger 20 erstreckt sondern quasi die Form bzw. Orientierung des Stegs 40 weiterführt. Die endgültige Ausrichtung des Befestigungsbereichs 21 erfolgt dann bei der Befestigung eines Bremsbelags.

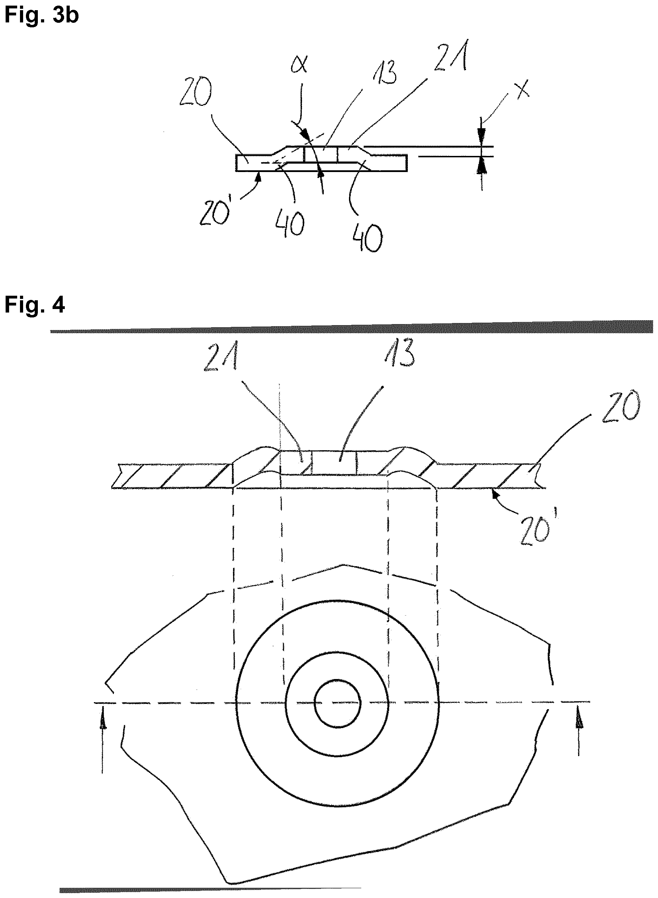

**Fig. 3b** zeigt eine Schnittdarstellung der aus Figur 2a bekannten Ausführungsform, wobei hier insbesondere in der Seitenansicht zwei Stege 40 zu sehen sind. Auch hier ist ein Versatz x skizziert. Eingezeichnet ist auch ein Winkel α, welcher zwischen dem Steg 40 und dem Belagträger 20 gebildet ist, wobei bevorzugte Werte hier in einem Bereich von etwa 10° bis 50° liegen.

**Fig. 4** zeigt eine Ausführungsform eines Belagträgers 20, welcher sich dadurch auszeichnet, dass hier ein Bereich um einen Befestigungsbereich 21, welcher die Öffnung 13 umfasst, ohne eine Ausnehmung oder einen Spalt etc. gebildet ist, sodass die Rückstellkraft, welche letztendlich die Verlagerbarkeit des Befestigungsbereichs 21 bewirken soll, allein durch die wulstartige Verformung des Bereichs um den Befestigungsbereich 21 bereitgestellt ist.

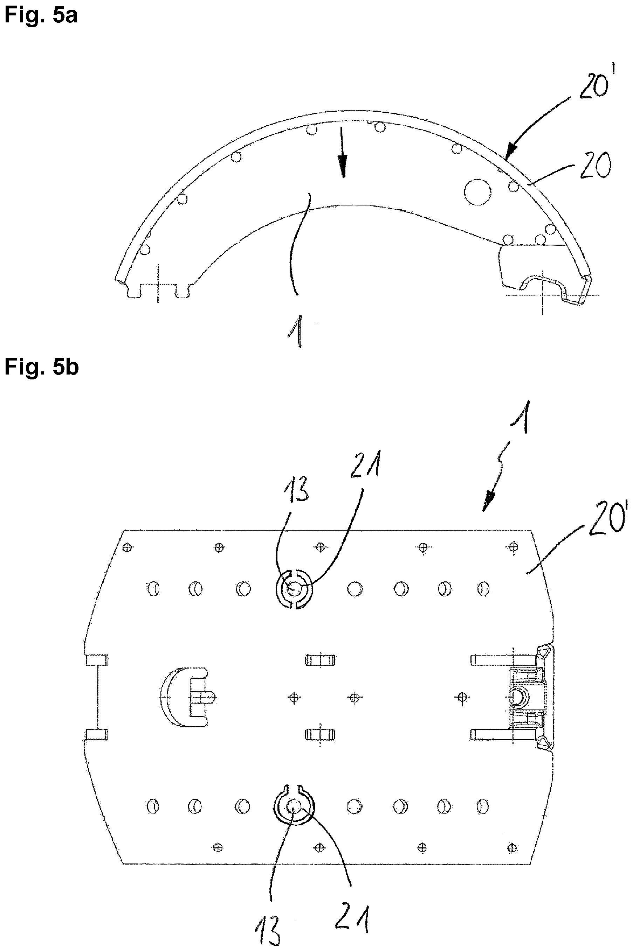

**Fig. 5a** zeigt in einer Seitenansicht eine Bremsbacke 1 für ein Trommelbremse, welche einen gekrümmten Belagträger 20 mit eine Anordnungsfläche 20' umfasst, welche zur Anordnung und Befestigung eines Bremsbelegs (hier nicht gezeigt) ausgebildet ist. Die Durchstellung bzw. Ausstellung der aus den vorherigen Figuren bekannten Befestigungsbereiche erfolgt entlang der hier dargestellten Pfeilrichtung, also weg von der Anordnungsfläche 20'.

**Fig. 5b** zeigt die aus Figur 5a bekannte Bremsbacke nach unten geklappt, sozusagen also von außen. Zu sehen ist die Anordnungsfläche 20' mit zwei Reihen von Öffnungen 13. Lediglich beispielhaft sind zwei Beispiele von Befestigungsbereichen 21, wie sie z. B. aus den Figuren 2a und 2c bekannt sind, eingezeichnet. Es versteht sich, dass bevorzugt alle der hier gezeigten Öffnungen 13 bzw. die um die Öffnungen liegenden Bereiche derart gestaltet sind, sodass ein dauerhaftes und sicheres Befestigen eines Bremsbelags möglich ist.

### Bezugszeichenliste

- 1: Bremsbacke
- 10: Befestigungsmittel
- 11: Endabschnitt
- 13: Öffnung
- 20: Belagträger
- 20': Anordnungsfläche
- 21: Befestigungsbereich (des Belagträgers)
- 30: Bremsbelag
- 30': Reibfläche
- 31: Befestigungsbereich (des Bremsbelags)
- 40: Steg
- b40: Breite des Stegs
- l40: Länge des Stegs
- 50: Spalt/Ausnehmung
- b50: Breite des Spalts/der Ausnehmung
- α, β, γ: Winkel
- x: Versatz
- Δ: Setzung

## Patentansprüche

1. Bremsbacke (1), insbesondere einer Trommelbremse für Nutzfahrzeuge, umfassend
einen Belagträger (20) mit einer Anordnungsfläche (20') zur Anordnung eines Bremsbelags (30),
einen Befestigungsbereich (21), der ausgelegt ist, mit einem Befestigungsmittel (10) zur Befestigung des Bremsbelags (30) in Eingriff gebracht zu werden,
wobei der Befestigungsbereich (21) zur Anordnungsfläche (20') rückstellfähig verlagerbar ausgebildet ist,
wobei zumindest eine Ausnehmung (50) den zumindest einen Befestigungsbereich (21) formt, wobei der Befestigungsbereich (21) eine Öffnung (13) zur Anordnung eines Befestigungsmittels (10) aufweist,
**dadurch gekennzeichnet, dass** der Befestigungsbereich (21) einen Versatz (x) gegenüber dem Belagträger (20) aufweist.

2. Bremsback (1) nach Anspruch 1,
wobei der Befestigungsbereich (21) im Wesentlichen parallel zum Belagträger (20) orientiert ist, und
wobei der Versatz (x) bevorzugt in einem Bereich von etwa 0,1 bis 0,8 mm liegt.

3. Bremsbacke (1) nach einem der vorhergehenden Ansprüche, umfassend zumindest eine Ausnehmung (50), welche einen Steg (40) formt, der den Belagträger (20) mit dem Befestigungsbereich (21) verbindet.

4. Bremsbacke (1) nach Anspruch 3,
wobei die zumindest eine Ausnehmung (50) zumindest abschnittsweise im Wesentlichen kreissegmentförmig ausgebildet ist.

5. Bremsbacke (1) nach einem der Ansprüche 3-4,
wobei die zumindest eine Ausnehmung (50) derart geformt ist, dass zumindest Bereiche der Ausnehmung (50) im Wesentlichen parallel zueinander verlaufen.

6. Bremsbacke (1) nach einem der Ansprüche 3-5,
wobei das Verhältnis einer Dicke des Befestigungsbereichs (21) zu einer Breite des Stegs (40) bzw. der Summe der Breiten aller Stege (40) in einem Bereich von etwa 0,05 bis 1, bevorzugt bei etwa 0,1 bis 0,5, liegt.

7. Bremsbacke (1) nach einem der Ansprüche 3-6,
wobei das Verhältnis der Dicke des Befestigungsbereichs (21) zu der Länge des Stegs (40) in einem Bereich von 0,05 bis 1, bevorzugt bei etwa 0,1 bis 0,5, insbesondere bevorzugt bei etwa 0,15 bis 0,35 liegt

8. Bremsbacke (1) nach einem der Ansprüche 3-7,
wobei der Befestigungsbereich (20) eine Öffnung (13) aufweist, und wobei eine Vielzahl von Stegen (40) umfänglich gleichverteilt um die Öffnung (13) angeordnet ist.

9. Bremsbacke (1) nach einem der Ansprüche 3-8,
wobei der zumindest einen Steg (40) einen Winkel (α) mit dem Belagträger (20) formt, welcher bevorzugt zwischen 10 und 50 ° liegt.

10. Bremsbacke (1) nach einem der vorhergehenden Ansprüche,
wobei der Belagträger (2) eine Vielzahl von Befestigungsbereichen (20) aufweist, welche insbesondere in einer Reihe angeordnet sind.

11. Verfahren zum Herstellen einer Nietverbindung zwischen zumindest zwei Bauteilen (20; 30),
umfassend die Schritte:
- Bereitstellen eines Nietelements (10) sowie Bereitstellen von zumindest zwei Bauteilen (20; 30), wobei als erstes Bauteil ein Belagträger (20) und als zweites Bauteil ein Bremsbelag (30) vorgesehen werden, wobei der Belagträger (20) eine Anordnungsfläche (20') zur Anordnung des Bremsbelags (30) aufweist;
- Umformen eines Befestigungsbereichs (21) des Belagträgers (20) derart, dass er beim Befestigen des Bremsbelags (30) auf der Anordnungsfläche (20') zumindest teilweise rückverformt wird, wobei der Befestigungsbereich (21) ausgelegt ist, mit dem Nietelement (10) zur Befestigung des Bremsbelags (30) in Eingriff gebracht zu werden;
- Befestigen des Belagträgers und Bremsbelags (20; 30) mit dem Nietelement (10).

## Claims

1. A brake shoe (1), in particular of a drum brake for utility vehicles, comprising
a lining carrier (20) with an arrangement face (20') for the arrangement of a brake lining (30),
a fastening area (21) which is configured to be placed in engagement with a fastening means (10) for fastening the brake lining (30),
wherein the fastening area (21) is designed so as to be movable in a resettable fashion with respect to the arrangement face (20') wherein at least one cut out (50) forms the at least one fastening area (21), wherein the fastening area (21) has an opening (13) for the arrangement of a fastening means (10),
**characterized in that**
the fastening area (21) has an offset (x) with respect to the lining carrier (20).

2. The brake shoe (1) as claimed in claim 1,
wherein the fastening area (21) is oriented essentially parallel to the lining carrier (20), and
wherein the offset (x) is preferably in a range from approximately 0.1 to 0.8 mm.

3. The brake shoe (1) as claimed in one of the preceding claims,
comprising at least one cutout (50) which forms a web (40) which connects the lining carrier (20) to the fastening area (21).

4. The brake shoe (1) as claimed in claim 3,
wherein the at least one cutout (50) is embodied essentially in the form of a circular segment, at least in certain sections.

5. The brake shoe (1) as claimed in one of claims 3-4,
wherein the at least one cutout (50) is shaped in such a way that at least areas of the cutout (50) run essentially parallel to one another.

6. The brake shoe (1) as claimed in one of claims 3-5,
wherein the ratio of a thickness of the fastening area (21) with respect to a width of the web (40) or the sum of the widths of all the webs (40) is in a range from approximately 0.05 to 1, preferably from approximately 0.1 to 0.5.

7. The brake shoe (1) as claimed in one of claims 3-6,
wherein the ratio of the thickness of the fastening area (21) with respect to the length of the web (40) is in a range from 0.05 to 1, preferably from approximately 0.1 to 0.5, particularly preferably from approximately 0.15 to 0.35.

8. The brake shoe (1) as claimed in one of claims 3-7,
wherein the fastening area (20) has an opening (13), and
wherein a multiplicity of webs (40) are arranged distributed equally around the circumference of the opening (13).

9. The brake shoe (1) as claimed in one of claims 3-8,
wherein the at least one web (40) forms an angle (α) with the lining carrier (20) which is preferably between 10 and 50°.

10. The brake shoe (1) as claimed in one of the preceding claims,
wherein the lining carrier (2) has a multiplicity of fastening areas (20) which are arranged, in particular, in a row.

11. A method for producing a rivet connection between at least two components (20; 30),
comprising the steps:
- making available a rivet element (10) and making available at least two components (20; 30), wherein as the first component a lining carrier (20) an as the second component a brake lining (30) are provided, wherein the lining carrier (20) has an arrangement face (20') for arranging the brake lining (30)
- shaping a fastening area (21) of the lining carrier (20) in such a way that when the brake lining (30) is fastened on the arrangement face (20') said attachment area (21) is at least partially restored to its original shape, wherein the fastening area (21) is configured to be placed in engagement with the rivet element (10) for fastening the brake lining (30);
- fastening of the lining carrier and brake lining (20; 30) to the rivet element (10).

## Revendications

1. Mâchoire de frein (1), en particulier d'un frein à tambour pour véhicules utilitaires, comportant
un support de garniture (20) pourvu d'une surface d'agencement (20') pour agencer une garniture de frein (30),
une zone de fixation (21) conçue pour venir en engagement avec un moyen de fixation (10) destiné à fixer la garniture de frein (30),
dans laquelle
la zone de fixation (21) est réalisée de façon déplaçable par rapport à la surface d'agencement (20) en pouvant être rappelée,
au moins un évidement (50) forme ladite au moins une zone de fixation (21), la zone de fixation (21) présentant une ouverture (13) pour agencer un moyen de fixation (10),
**caractérisée en ce que**
la zone de fixation (21) présente un décalage (x) par rapport au support de garniture (20).

2. Mâchoire de frein (1) selon la revendication 1,
dans laquelle
la zone de fixation (21) est orientée sensiblement parallèlement au support de garniture (20), et
le décalage (x) est de préférence dans une plage d'environ 0,1 à 0,8 mm.

3. Mâchoire de frein (1) selon l'une des revendications précédentes, comprenant au moins un évidement (50) qui constitue une âme (40) qui relie le support de garniture (20) à la zone de fixation (21).

4. Mâchoire de frein (1) selon la revendication 3,
dans laquelle
ledit au moins un évidement (50) est réalisé au moins localement sensiblement en forme de segment de cercle.

5. Mâchoire de frein (1) selon l'une des revendications 3 à 4,
dans laquelle
ledit au moins un évidement (50) est formé de telle sorte que des zones au moins de l'évidement (50) s'étendent sensiblement parallèlement l'une à l'autre.

6. Mâchoire de frein (1) selon l'une des revendications 3 à 5,
dans laquelle
le rapport de l'épaisseur de la zone de fixation (21) sur une largeur de l'âme (40) ou sur la somme des largeurs de toutes les âmes (40) est dans une plage d'environ 0,05 à 1, de préférence d'environ 0,1 à 0,5.

7. Mâchoire de frein (1) selon l'une des revendications 3 à 6,
dans laquelle
le rapport de l'épaisseur de la zone de fixation (21) sur la longueur de l'âme (40) est dans une plage de 0,05 à 1, de préférence d'environ 0,1 à 0,5, de manière particulièrement préférée d'environ 0,15 à 0,35.

8. Mâchoire de frein (1) selon l'une des revendications 3 à 7,
dans laquelle
la zone de fixation (20) présente une ouverture (13) et
une multitude d'âmes (40) sont agencées en répartition périphérique régulière autour de l'ouverture (13).

9. Mâchoire de frein (1) selon l'une des revendications 3 à 8,
dans laquelle
ladite au moins une âme (40) forme un angle (α) avec le support de garniture (20), qui est de préférence entre 10 et 50°.

10. Mâchoire de frein (1) selon l'une des revendications précédentes, dans laquelle
le support de garniture (2) présente une multitude de zones de fixation (20) qui sont agencées en particulier en une rangée.

11. Procédé pour réaliser une liaison rivetée entre au moins deux composants (20 ; 30), comprenant les étapes consistant à :
- fournir un élément de rivetage (10) et fournir au moins deux composants (20 ; 30), le premier composant étant un support de garniture (20) et le second composant étant une garniture de frein (30), le support de garniture (20) présentant une surface d'agencement (20') pour agencer la garniture de frein (30) ;
- mettre en forme une zone de fixation (21) du support de garniture (20) de manière à être remise en forme au moins partiellement lors de la fixation de la garniture de frein (30) sur la surface d'agencement (20'), la zone de fixation (21) étant conçue pour venir en engagement avec l'élément de rivetage (10) pour la fixation de la garniture de frein (30) ;
- fixer le support de garniture et la garniture de frein (20 ; 30) avec l'élément de rivetage (10).
